# EUROPÄISCHE PATENTSCHRIFT

(11) **EP 0 584 564 B1**
(45) Veröffentlichungstag und Bekanntmachung des Hinweises auf die Patenterteilung: **29.11.1995**
(21) Anmeldenummer: 93112040.6
(22) Anmeldetag: 28.07.1993
(51) Int. Cl.: F02F 1/42, F02B 23/06

(54) **Dieselbrennkraftmaschine**
Diesel internal combustion engine
Moteur à combustion interne du type Diesel

(30) Priorität: 27.08.1992 DE 4228517
(43) Veröffentlichungstag der Anmeldung: 02.03.1994
(73) Patentinhaber: MAN Nutzfahrzeuge Aktiengesellschaft, 80976 München (DE)
(72) Erfinder: Neitz, Alfred, Ing. grad., D-90530 Wendelstein (DE)

(56) Entgegenhaltungen:
- CH-A- 459 659
- DE-A- 3 322 544
- DE-A- 3 707 784
- DE-A- 3 728 167
- FR-A- 797 914
- GB-A- 1 217 624
- PATENT ABSTRACTS OF JAPAN vol. 10, no. 73 (M-463)(2130) 22. März 1986 & JP-A-60 217 009 (ISUZU JIDOSHA K.K.) 30. Oktober 1985

## Beschreibung

Die Erfindung bezieht sich auf eine Dieselbrennkraftmaschine gemäß dem Oberbegriff des Patentanspruches 1.

Aus CH-A- 459 659 ist eine Dieselbrennkraftmaschine bekannt, bestehend aus Zylinder, Zylinderkopf, Kolben, Brennraum und einem Ein- und Auslaßventil. Ein Zylinderkopfboden weist eine kugelförmige Wölbung auf. Ein Kolbenboden ist kegelförmig und zur Zylinderachse rotationssymmetrisch ausgebildet. Die Einspritzdüse ist ebenfalls zentrisch zur Zylinderachse angeordnet. Ein- und Auslaßventil sind in der Ebene der Zylinderachse liegend angeordnet. Eine derartige Ausbildung des Brennraumes und der Ventilanordnung trägt zur Verbesserung von Wirkungsgrad und Abgasqualität bei, jedoch ist sie nicht auf eine Brennkraftmaschine mit vier Ventilen anwendbar.

Ausgehend von einer Dieselbrennkraftmaschine gemäß dem Oberbegriff liegt der Erfindung die Aufgabe zugrunde, die Brennraumform so weiterzubilden, daß sie ohne Qualitätseinbußen hinsichtlich Wirkungsgrad und Abgasqualität auch für Brennkraftmaschinen mit vier Ventilen anwendbar ist.

Gelöst wird diese Aufgabe durch die Merkmale von Patentanspruch 1.

Bei Verwendung von vier Ventilen möchte man frei sein in der Wahl der Lage der Ventile zur Zylinderachse. Erfindungsgemäß erreicht man dies dadurch, daß man dem Zylinderkopfboden unterschiedliche Wölbungsradien gibt und den Verlauf des Kolbenbodens derart dem Verlauf des Zylinderkopfbodens anpaßt, daß keine Berührung der Brennstoffstrahlen mit den umgebenden Brennraumwänden eintritt. Durch die Verbesserung des Ladungswechsels durch die Anwendung von vier Ventilen wird eine weitere Verbesserung von Wirkungsgrad und Abgasqualität erzielt.

Vorteilhafte Weiterbildungen der Erfindung können den Unteransprüchen 2 bis 4 entnommen werden.

Ein Ausführungsbeispiel der Erfindung ist in Zeichnungen dargestellt. Es zeigt:
- Figur 1: einen Längs- und einen Querschnitt I-I aus Figur 2, durch den Zylinderkopf mit zwei Ein- und zwei Auslaßventilen
- Figur 2: eine Draufsicht auf die Zylinderköpfe mit Anordnung von jeweils vier Gaswechselventilen
- Figur 3: einen Querschnitt durch einen Zylinderkopf mit einem Ein- und Auslaßventil und einer hydraulischen Ventilsteuerung.

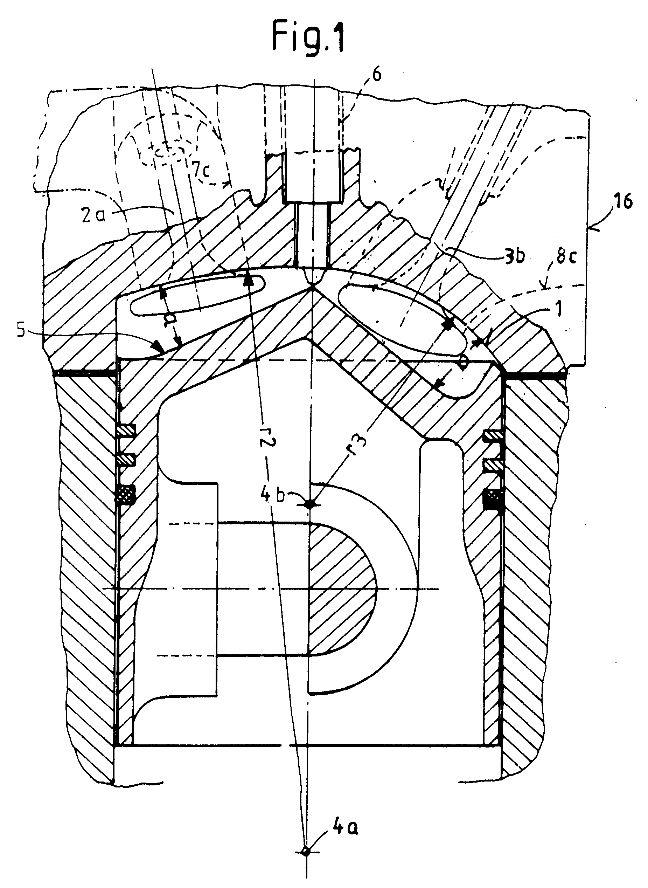

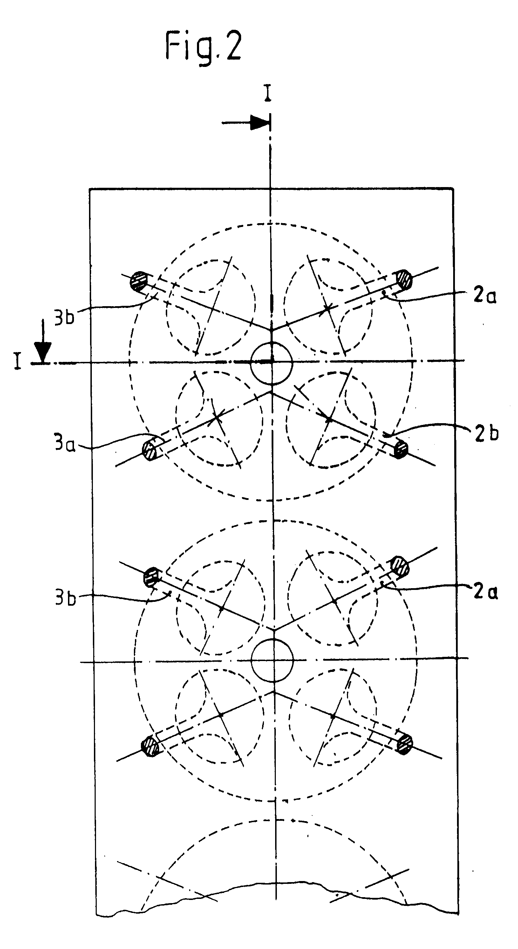

Figur 1 zeigt in einem Längs- bzw. Querschnitt I-I aus Figur 2 den Verlauf eines Zylinderkopfbodens 1 auf der Brennraumseite bei Anwendung von vier Ventilen, also bei zwei Ein- und zwei Auslaßventilen 2a, 2b bzw. 3a, 3b ( Figur 2). Im Querschnitt I-I sind nur die Ein- bzw. Auslaßventile 2a, 3b zu sehen. Der Zylinderkopfboden 1 weist in der Ebene, die von einer Motorlängsachse und der Zylinderachse aufgespannt wird, einen Krümmungsradius r₂ mit einem Krümmungsmittelpunkt 4a auf, während in der Ebene, die von der Zylinderachse rechtwinklig zur Motorlängsachse aufgespannt wird, der Krümmungsradius r₃ betragt, mit einem Krümmungsmittelpunkt 4b.

Die unterschiedlichen Krümmungsradien der stetig ineinander übergehenden Kugelabschnitte werden erforderlich, da sich sonst Ventile benachbarter Zylinder im Wege stehen, wie dies in Figur 2 veranschaulicht wird. Der Kolbenboden 5 ist derart gewählt, daß die von einer mehrstrahligen Einspritzdüse 6 ausgehenden Brennstoffstrahlen weder den Zylinderkopfboden 1 noch den Kolbenboden 5 berühren,
wobei für einen konstanten Abstand "a" von der Zylinderachse dieser Abstand "a" zwischen Kolbenboden 5 und dem Zylinderkopfboden 1 stets gleichbleibend ist. Die Einlaß- und Auslaßkanäle 7c und 8c sind so gestaltet, daß die Einlaßkanäle 7c überwiegend parallel zur Zylinderachse verlaufen und die Auslaßkanäle 8c zur Vermeidung unnötiger Wärmeverluste auf kürzestem Weg zur seitlichen Zylinderbegrenzung 16 geführt sind. Entsprechend den Merkmalen des Unteranspruches 3 kann der Kolbenboden 5 in Richtung der Zylinderachse gesehen radial verlaufende Mulden aufweisen, die in ihrer Kontur den von Einspritzdüse 6 ausgehenden Brennstoffstrahlen angepaßt sind. Dies ist bei hohen Verdichtungsverhältnissen erforderlich, wo der Abstand "a" sehr klein wird.

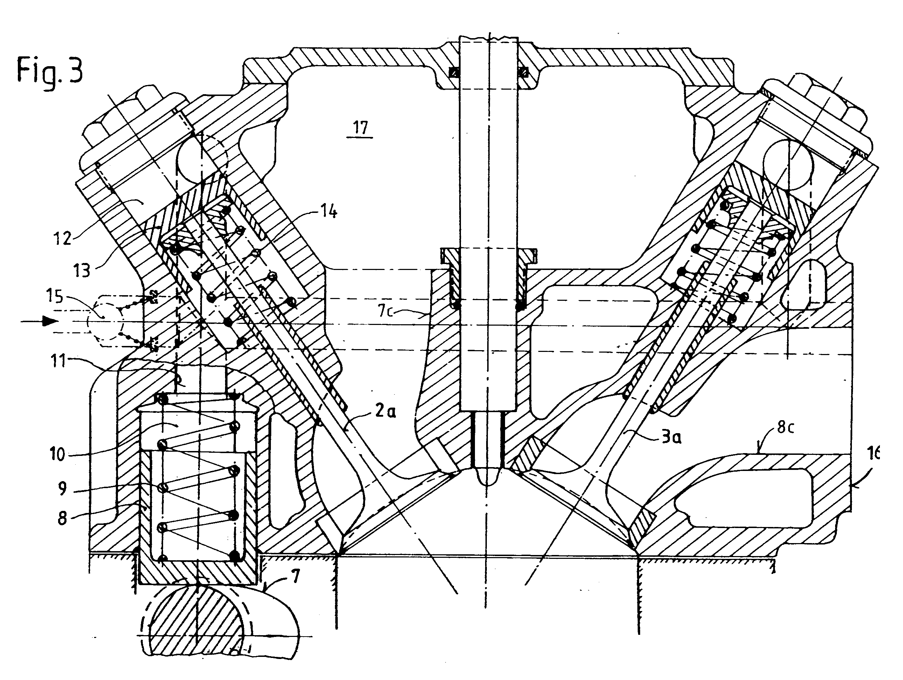

Figur 2 zeigt schematisch eine Draufsicht in Richtung auf die Zylinderköpfe bei Anwendung von 4 Ventilen (Figur 1). Jeder Zylinderkopf weist die zwei Einlaß- und Auslaßventile 2a, 2b bzw. 3a, 3b auf, deren Achsen aus der Zeichenebene herausragend zu denken sind. Damit sich die Ventile 2a, 2b und 3a, 3b benachbarter Zylinder nicht tangieren, weist der Zylinderkopfboden 1 zwei stetig ineinander übergehende Kugelabschnitte mit aus Figur 1 ersichtlichen unterschiedlichen Krümmungen r₂ und r₃ auf. Die jeweils lotrecht auf den sich örtlich ergebenden Flächen des Zylinderkopfbodens 1 (Figur 3) stehenden Ventile weisen damit eine geeignete räumliche Lage auf, so, daß sie sich nicht tangieren.

Eine vorteilhafte hydraulische Ventilsteuerung ist in Figur 3 dargestellt. Von den vier Ventilen 2a, 2b und 3a, 3b ( Fig. 2) ist hier nur das Einlaß- und das Auslaßventil 2a und 3a dargestellt, wobei diese Ventile in die Zeichenebene geklappt dargestellt sind. Das Einlaß- und Auslaßventil 2a, 3a wird separat auf hydraulischem Wege betätigt. Die hydraulische Ventilsteuerung ist für beide Ventile gleich und soll deshalb nur am Beispiel des Einlaßventils 2a näher erläutert werden. Ein Nocken 7 betätigt einen als Geberkolben 8 ausgebildeten Stößel, der durch eine Druckfeder 9 in Ruhelage gehalten wird. Ein Druckraum 10 des Geberkolbens 8 kommuniziert über eine im Zylinderkopf angeordnete Bohrung 11 mit einem Druckraum 12 eines Nehmerkolbens 13 des Einlaßventils 2a. Eine Ventilfeder 14 hält den Nehmerkolben 13 zusammen mit dem Einlaßventil 2a in Schließstellung. Durch eine Ölzuführung über ein Rückschlagventil 15 werden die Leckageverluste des Hydrauliksystems ausgeglichen. Erfindungsgemäß verläuft der Auslaßkanal 8c auf kürzestem Weg zur seitlichen Zylinderkopfbegrenzung 16. Ermöglicht wird der kurze Auslaßkanal 8c durch die Schrägstellung des Auslaßventils 3a. Durch die erfindungsgemäße Integration der hydraulischen Ventilsteuerung in den Zylinderkopf wird die Bauhöhe des Motors deutlich verringert. Der Einlaßkanal 7c verläuft wieder überwiegend parallel zur Zylinderachse. Die Verbrennungsluft wird durch einen in den Zylinderkopf integrierten Luftkanal 17 angesaugt.

## Patentansprüche

1. Dieselbrennkraftmaschine, bestehend aus Zylinder, Zylinderkopf, Kolben, Brennraum, einer Einspritzdüse, deren Achse mit der Achse des Zylinders zusammenfällt und einem Ein- und Auslaßventil (2a, 3a) wobei der Zylinderkopfboden (1) kugelförmig gewölbt ist und der Kolbenboden (5) kegelförmig ausgebildet ist, dadurch gekennzeichnet, daß ein zweites Ein- und Auslaßventil ( 2b, 3b ) vorgesehen ist, daß die Auslaßkanäle (8c) unmittelbar nach dem Ventilsitz der Auslaßventile (3a, 3b) zu einer seitlichen Zylinderkopfbegrenzung (16) geführt werden, daß die durch die Mittellinien von Ein- und Auslaßventilen (2a, 3b bzw. 2b, 3a) aufgespannten Ebenen einerseits die Zylinderachse schneiden und andererseits in Richtung der Zylinderachse gesehen quer zu der Motorlängsachse stehen, daß der Zylinderkopfboden (1) bei Anwendung von zwei Einlaß- bzw. zwei Auslaßventilen (2a, 2b bzw. 3a, 3b) aus zwei Kugelabschnitten unterschiedlicher Krümmungsradien r₂ r₃ ausgebildet ist, deren Krümmungsmittelpunkte (4a, 4b) auf der Zylinderachse liegen, daß sich dabei ein erster Kugelabschnitt mit Krümmungsradius r₂ in einer von der Motorlängsachse und der Zylinderachse aufgespannten Ebene befindet und sich ein zweiter Kugelabschnitt mit Krümmungsradius r₃ in einer von der Zylinderachse und einer rechtwinklig zur Motorlängsachse aufgespannten Ebene befindet, daß in den dazwischenliegenden Ebenen in der Zylinderachse die zwei Kugelabschnitte stetig ineinander übergehen, daß der Kolbenboden (5) derart geformt ist, daß ausgehend von der Spitze des Kolbenbodens (5) der Abstand "a" zwischen Kolbenboden (5) und Zylinderkopfboden (1) in dem Maße zunimmt, in dem eine Kontur von Brennstoffstrahlen der Einspritzdüse (6) auffächert, und daß die Öffnung der Ein- und Auslaßventile (2a, 3b bzw. 3a, 2b) in Richtung der Zylinderachse gesehen jeweils quer zur Motorlängsachse angeordnet sind.

2. Dieselbrennkraftmaschine nach Anspruch 1, dadurch gekennzeichnet, da» die Einlaßkanäle (7c) überwiegend parallel zur Zylinderachse verlaufend zu den Ventilsitzen der Einlaßventile (2a, 2b) geführt werden.

3. Dieselbrennkraftmaschine nach Anspruch 1, dadurch gekennzeichnet, daß der Kolbenboden (5) in Richtung Zylinderachse gesehen radial gerichtete Mulden aufweist, und daß die Mulden im Querschnitt gesehen derart ausgebildet sind, daß sie der Form der von der Einspritzdüse (6) ausgehenden Brennstoffstrahlen angepaßt sind.

4. Dieselbrennkraftmaschine nach Anspruch 1, dadurch gekennzeichnet, daß die Betätigung der Ein- und Auslaßventile (2a, 2b, 3a, 3b) hydraulisch erfolgt, daß die Steuerung aus einem mittels Druckfeder (9) in Ruhestellung gehaltenen Geberkolben (8), einem mit den Einlaß- oder Auslaßventilen ( 2a, 2b, 3a, 3b) verbundenen Nehmerkolben (13) und einer den Geberkolben (8) und den Nehmerkolben (13) verbindenden Bohrung (11) gebildet wird, und daß der Geberkolben (8) von einem Nocken (7) einer in einem Kurbel-Zylindergehäuse gelagerten Nockenwelle betätigbar ist.

## Claims

1. A diesel internal combustion engine, comprising a cylinder, a cylinder head, a piston, a combustion chamber, an injection nozzle, the axis of which coincides with the axis of the cylinder, and an intake valve and an exhaust valve (2a, 3a), the base (1) of the cylinder head being curved spherically and the base of the piston (5) being shaped conically, **characterised in that** a second intake valve and a second exhaust valve (2b, 3b) are provided, and the exhaust ducts (8c) extend directly from the seat of the exhaust valves (3a, 3b) to a lateral edge (16) of the cylinder head, and the planes formed by the central lines of the intake and exhaust valves (2a, 3b and 2b, 3a) firstly intersect the cylinder axis and also extend transversely to the longitudinal axis of the engine when seen in the direction of the cylinder axis, and when two intake valves or two exhaust valves (2a, 2b, or 3a, 3b) are used, the base (1) of the cylinder head is formed from two sphere portions having different radii of curvature r₂, r₃, and the centres of curvature (4a, 4b) thereof are located on the cylinder axis, a first sphere portion with a radius of curvature r₂ being located in a plane formed by the longitudinal axis of the engine and the cylinder axis, and a second sphere portion with a radius of curvature r₃ being located in a plane formed by the cylinder axis at right angles to the longitudinal axis of the engine, and the two sphere portions merge continuously in the intermediate planes in the cylinder axis, and the base (5) of the piston is formed in such a way that beginning from the apex of the piston base (5) the separating distance "a" between the piston base (5) and the base (1) of the cylinder head increases to the extent to which the outline of the fuel jets from the injection nozzle (6) fans out, and the openings of the intake and exhaust valves (2a, 3b or 3a, 2b) are each arranged transversely to the longitudinal axis of the engine, when seen in the direction of the cylinder axis.

2. A diesel internal combustion engine in accordance with claim 1, **characterised in that** the intake ducts (7c) are arranged so as to extend predominantly parallel to the cylinder axis, up to the seats of the intake valves (2a, 2b).

3. A diesel internal combustion engine in accordance with claim 1, **characterised in that** when seen in the direction of the cylinder axis the piston base (5) has radially oriented troughs, and when seen in cross-section the said troughs are formed so as to be adapted to the shape of the jets of fuel issuing from the injection nozzle (6).

4. A diesel internal combustion engine in accordance with claim 1, **characterised in that** actuation of the intake and exhaust valves (2a, 2b, 3a, 3b) takes place hydraulically, and the control means is formed by a driving piston (8) retained by a pressure spring (9) in an inoperative position, a driven piston (13) connected to the intake or exhaust valves (2a, 2b, 3a, 3b) and a bore (11) connecting the driving piston (8) and the driven piston (13), and the said driving piston (8) is actuatable by a cam (7) on a camshaft mounted in a crank cylinder casing.

## Revendications

1. Moteur à combustion interne Diesel composé d'un cylindre, d'une culasse, d'un piston, d'une chambre de combustion, d'un injecteur dont l'axe coïncide avec l'axe du cylindre et d'une soupape d'admission et d'une soupape d'échappement (2a, 3a), le fond (1) de la culasse étant bombé suivant une forme sphérique et le fond (5) du piston étant de forme conique, caractérisé par une seconde soupape d'admission et une seconde soupape d'échappement (2b, 3b), les canaux d'échappement (8) étant conduits directement en aval du siège de chaque soupape d'échappement (3a, 3b) vers une paroi latérale (16) de la culasse, les plans passant par les axes des soupapes d'admission et d'échappement (2a, 3b ; 2b, 3a) d'une part coupent l'axe des cylindres et d'autre part sont dirigés dans la direction de l'axe du cylindre, transversalement par rapport à l'axe longitudinal du moteur, le fond (1) des culasses dans le cas de deux soupapes d'admission et deux soupapes d'échappement (2a, 2b ; 3a, 3b), est réalisé en deux calottes sphériques à rayons de courbure différents (r₂, r₃), dont les centres de courbure (4a, 4b) sont situés sur l'axe du cylindre, la première calotte sphérique de rayon de courbure (r₂) se trouvant dans un plan passant par l'axe longitudinal du moteur et l'axe du cylindre et la seconde calotte sphérique de rayon de courbure (r₃) étant située dans un plan passant par l'axe du cylindre, plan perpendiculaire à l'axe longitudinal du moteur, et dans les plans intermédiaires, passant par l'axe du cylindre, les deux calottes sphériques passent en continu l'une dans l'autre, le fond (5) du piston étant formé de sorte que partant de la pointe du fond (5) du piston, la distance "a" entre le fond (5) du piston et le fond (1) de la culasse augmente de la manière suivant laquelle se déploie l'éventail formé par les jets de carburant émis par l'injecteur (6) et l'ouverture des soupapes d'admission et d'échappement (2a, 3b ; 3a, 2b) vue dans la direction de l'axe du cylindre est chaque fois en travers de l'axe longitudinal du moteur.

2. Moteur à comoustion interne Diesel selon la revendication 1, caractérisé en ce que les canaux d'admission (7c) sont essentiellement parallèles à l'axe du cylindre pour arriver aux sièges des soupapes d'admission (2a, 2b).

3. Moteur à comoustion interne Diesel selon la revendication 1, caractérisé en ce que le fond (5) du piston comporte des goulottes radiales par rapport à l'axe du cylindre et ces goulottes ont une section adaptée à la forme des jets de carburant émis par les injecteurs (6).

4. Moteur à combustion interne Diesel selon la revendication 1, caractérisé en ce que la commande des soupapes d'admission et d'échappement (2a, 2b ; 3a, 3b) est hydraulique, cette commande se composant d'un piston émetteur (8) maintenu en position de repos par un ressort de compression (9) et un piston récepteur (13) relié aux soupapes d'admission ou d'échappement (2a, 2b ; 3a, 3b) ainsi que d'un perçage (11) reliant le piston émetteur (8) et le piston récepteur (13), le piston émetteur (8) étant actionné par une came (7) d'un arbre à cames logé dans le bloc moteur.
